# EUROPÄISCHE PATENTSCHRIFT

(11) **EP 1 380 790 B1**
(45) Veröffentlichungstag und Bekanntmachung des Hinweises auf die Patenterteilung: **09.11.2005**
(21) Anmeldenummer: 03015255.7
(22) Anmeldetag: 07.07.2003
(51) Int. Cl.: F16L 37/088

(54) **Steckverbindung mit Montagehilfe für den Anschluss von Rohr- und Schlauchleitungen**
Plug and socket connector with mounting aid for connecting pipe and hose conduits
Connecteur enfichable avec aide au montage pour raccorder tuyaux et conduites souples

(30) Priorität: 10.07.2002 DE 10231114
(43) Veröffentlichungstag der Anmeldung: 14.01.2004
(73) Patentinhaber: Henn GmbH & Co.KG, 6850 Dornbirn (AT)
(72) Erfinder: Hartmann Harald, A-6800 Gisingen (AT); Forer Wolfgang, A-6850 Dornbirn (AT)
(74) Vertreter: Riebling, Peter

(56) Entgegenhaltungen:
- EP-A- 0 491 219
- EP-B- 0 750 152
- DE-A- 19 713 446
- DE-C- 10 017 679
- US-A- 5 419 356
- US-A- 5 586 791

## Beschreibung

Die Erfindung betrifft eine Steckverbindung mit Montagehilfe für den Anschluss von Rohr- und Schlauchleitungen, insbesondere zur Verwendung von Rohrleitungssystemen von Kraftfahrzeugen und dergleichen, nach dem Oberbegriff des unabhängigen Anspruchs.

Eine eingangs genannte Steckverbindung - allerdings ohne Montagehilfe - ist aus der auf den gleichen Anmelder zurück gehenden EP 0 750 152 B1 bekannt geworden. Auf die Offenbarung der dort beschriebenen Steckverbindung wird verwiesen.

Bei der bekannten Steckverbindung fehlte eine eigene Montagehilfe. Es konnte daher vorkommen, dass die zur Herstellung der Rastverbindung am einen Teil vorhandenen Sicken nicht winkelgerecht in die am anderen Teil angeordneten Rastöffnungen eingesteckt wurden. Dies konnte insbesondere bei schwachwandingen Materialien vorkommen, wo die Steckverbindung mittels Werkzeugen hergestellt wird. Es konnte bei Werkzeughilfe deshalb vorkommen, dass die Rastverbindung ineinander gedrückt wurde, ohne dass die der Rastung dienenden Sicken mit den zugeordneten Rastfedern verrasteten. Eine optische Kontrolle im zusammengesteckten Zustand, ob die Verbindung funktionsgerecht zusammengesteckt war, gab es hierbei jedoch nicht. Man konnte also der zusammengesteckten Verbindung von außen nicht ansehen, ob sie ordnungsgemäß zusammengesteckt war oder nicht.

Die in der EP 0 750 152 B1 beschriebenen Sicken, welche der Rastverbindung zugeordnet sind, konnten nicht in allen Fällen - insbesondere nicht bei einer Werkzeugmontage - ein fehlerhaftes, winkelverdrehtes Einstecken verhindern.

Auch eine Sicherung gegen Verdrehung in Umfangsrichtung bei zusammengesteckter Verbindung konnte bei hohen Temperaturen und bei entsprechenden Drehmomentbelastungen nicht immer gewährleistet werden.

Mit der gattungsbildenden US 5,419,356 A wird ein Anschlussteil für einen Wassertank offenbart, wobei das Anschlussteil als Steckverbindung ausgebildet ist, geeignet für den Anschluss von Rohr- und Schlauchleitungen, insbesondere zur Verwendung von Rohrleitungssystemen von Kraftfahrzeugen und dergleichen, mit einem Rohrstutzen und einem mit diesem zusammen wirkenden Stecker an dem die Rohr- und Schlauchleitung befestigt ist, wobei zwischen dem Stecker und dem Rohrstutzen eine in axialer Richtung wirkende Verschiebeführung angeordnet ist, die gegen Verdrehung in Umfangsrichtung sichert, die aus mehreren an der vorderen Stirnfläche des Steckers und/oder des Rohrstutzens verteilt angeordneten und in axialer Richtung wirkenden Zapfen besteht, weiche mit zugeordneten Ausnehmungen am gegenüber liegenden Teil zusammen wirken, wobei als Montagehilfe zur Sicherung der Steckverbindung gegen Einwirkung von Drehmomenten die Ausnehmungen unmittelbar am Außenumfang des gegenüberliegenden Teils angeformt sind und dass die Montagehilfe nur eine bestimmte Verdrehlage zwischen den zusammenzusteckenden Teilen erlaubt.

Diese Erfindung weist den Nachteil auf, dass die auf den Umfang des Steckers und/oder Rohrstutzens vertellten Zapfen nicht asymmetrisch angeordnet sind, wodurch eine Verdrehung des Steckers um 180° möglich ist und somit eine Verdrehsicherung gemäß vorliegender Patentanmeldung dieser Entgegenhaltung nicht zu entnehmen ist.

Mit der EP 0 491 219 A1 wird ein Wasserkasten für ein Wärmetauscher mit einem Aufnahmestutzen und einem einsteckbaren Schlauchstutzen mit einem verastbaren Einsteckteil und Aufnahmeteil an dem Wasserkasten offenbart, wobei die für die Rastvorrichtung bildenden Teile radial außen am Aufnahmestutzen und am Schlauchanschlussstutzen angeordnet sind.

Diese Erfindung weist den Nachteil auf, dass die radail außen am Aufnahmestutzen uns am Schlauchanschlussstutzen angeordneten Teile der Rastvorrichtung keine asymmetrische Anordnung aufweisen, wodurch keine Verdrehsicherung, sondern lediglich eine Verbesserung der Steifigkeit der Verbindung gewährleistet ist.

Mit der auf den gleichen Anmelder zurückgehende Druckschrift EP 0 750 152 B1 wird eine Steckverbindung für den Anschluss von Rohr- und Schlauchleitungen offenbart, wobei die Steckverbindung eine Rohr- oder Schlauchleitung aufnehmende Innenhülse und eine Außenhülse aufweist und einen verrastbaren Rohrstutzen, welcher über die Außenhülse schiebbar ist, wobei der Rohrstutzen mindestens eine radial am Außenumfang angeordnete Ausbuchtung aufweist, durch welche ein Teil des Sicherungsmittel des am Rohrstutzen angeordneten Duchbruchs hindurchgreift, wobei der Ausbuchtung eine an der Außenhülse angeordnete Nase zugeordnet ist, mit der das Sicherungsmittel zusammenwirkt und wobei die Nasen-/Durchbruch-Anordnung eine Verschiebeführung der jeweiligen Ausbuchtung mit einer unverlierbaren, als Sicke ausgebildeten Rastnase zusamenwirkende Rastfeder aufweist.

Dieser Erfindung ist eine asymmetrische Anordnung der Rastvorrichtung nicht zu entnehmen. Vielmehr ist eine symmetrische Anordnung der Rastvorrichtung offenbart, die mit einer symmetrisch ausgebildeten Rastfeder zusammenwirkt.

Der Erfindung liegt deshalb die Aufgabe zugrunde, eine Steckverbindung für den Anschluss von Rohr- und Schlauchleitungen so weiterzubilden, dass eine zusätzliche Verdrehsicherung beim Verrasten der Steckverbindung und auch im zusammengesteckten Zustand gegeben ist.

Zur Lösung der gestellten Aufgabe ist die Erfindung durch die Merkmale nach Anspruch 1 gekennzeichnet.

Mit der gegebenen technischen Lehre wird demgemäss zu der in der EP 0 750 152 B1 gezeigten Steckverbindung noch eine zusätzliche Montagehilfe vorgeschlagen.

Diese Montagehilfe besteht im Wesentlichen aus einer in axialer Richtung betätigbaren Verschiebeführung zwischen den beiden ineinander verrastbaren Teilen, welche gegen eine Verdrehung in Umfangsrichtung sichert.

Die erfindungsgemäße Verdrehsicherung wirkt als formschlüssige Verschiebeführung. Sie besteht in einer bevorzugten Ausgestaltung der Erfindung aus mehreren an der vorderen Stirnfläche verteilt angeordneten und in axialer Richtung wirkenden Zapfen, welche mit zugeordneten Ausnehmungen am gegenüberliegenden Rastteil zusammenwirken.

Die beiden zu verrrastenden Teile werden in der folgenden Erfindungsbeschreibung als Stecker und als Rohrstutzen bezeichnet.

Der Stecker besteht hierbei aus einer Außenhülse und einer damit verbundenen Innenhülse, und dieser Stecker ist demgemäss über die in der EP 0 750 152 B1 beschriebenen Verrastung mit dem Rohrstutzen verrastbar.

Die Erfindung ist jedoch nicht allein auf die in der EP 0 750 152 B1 beschriebenen Verrastung beschränkt. Es werden sämtliche Verrastungen zwischen einem Stecker und einem Rohrstutzen beansprucht, welche die erfindungsgemäße Montagehilfe nach der vorliegenden Beschreibung verwenden.

In einer ersten wichtigen Ausführungsform besteht also die Verschiebeführung (Montagehilfe) aus an dem einen Teil angeordneten und in axialer Richtung weisenden Zapfen, die mit gegenüber liegenden Ausnehmungen am gegenüber liegenden Rastteil zusammenwirken. Hierauf ist die Erfindung jedoch nicht beschränkt, weil die Erfindung jegliche Art von Verschiebeführung beansprucht, welche in axialer Richtung bewegt wird und die gegen Verdrehung in Umfangsrichtung sichert.

Statt der hier beschriebenen Zapfen, die mit zugeordneten Ausnehmungen zusammenarbeiten, können deshalb beliebige andere mechanische Äquivalente verwendet werden. Beispielsweise ist es möglich, mit an dem einen Teil in radialer Richtung vorstehenden Stehbolzen zu arbeiten, welche am anderen Teil mit zugeordneten, in axialer Richtung verlaufenden, Nuten zusammenwirken.

Selbstverständlich ist es für die Erfüllung des Erfinduhgsgedankens gleichgültig, an welchen der beiden Rastteile die in axialer Richtung weisenden Zapfen und an welchen der beiden Rastteile die gegenüberliegenden Ausnehmungen angeordnet sind.

Der einfacheren Beschreibung wegen wird in der folgenden, allgemeinen Beschreibung lediglich die Wirkung der Zapfen beispielsweise in ihrer Befestigung am Rohrstutzen beschrieben, die mit zugeordneten Ausnehmungen am Stecker zusammenwirken. Es wird jedoch nochmals darauf hingewiesen, dass diese Beschreibung nicht beschränkend für den Erfindungsgegenstand ist.

Wenn man nun beispielsweise diese Zapfen an der Stirnfläche des Rohrstutzens anordnet und die Zapfen die Stirnfläche des Rohrstutzens in axialer Richtung überragen, ergibt sich der wesentliche Vorteil, dass beim Zusammenstecken der Steckverbindung zunächst die Zapfen auf die zugeordneten Flächen des Steckers gelangen und dort eine erste Führung der später herzustellenden Rastverbindung darstellen.

Die Zapfen sind nun an der Vorderseite der Stirnfläche des Rohrstutzens in der Weise angeordnet, dass nur eine einzige Steckmöglichkeit zwischen dem Stecker und dem Rohstutzen besteht. Zu diesem Zweck sind die Zapfen am Umfang verteilt asymmetrisch angeordnet und arbeiten mit zugeordneten, asymmetrisch am Umfang des Steckers angeordneten Ausnehmungen zusammen.

Neben der ungleichmäßigen Verteilung am Außenumfang des Steckers und des Rohrstutzens der beschriebenen Verschiebeführung gibt es auch noch die Möglichkeit, dass man die Zapfen mit unterschiedlicher Breite vorsieht, so dass der jeweilige Zapfen nur in eine bestimmte Ausnehmung gleicher Breite eingesteckt werden kann.

Damit wird ein winkelverdrehtes Einstecken der beiden miteinander zu verrastenden Teile auf jeden Fall vermieden.
Es besteht im übrigen noch der weitere Vorteil, dass eine genauere Zentrierung zwischen den beiden Steckteilen (Rastteilen) geschieht. Wenn die Zapfen nämlich in entsprechend dimensionierte Ausnehmungen eingeführt werden, welche nur ein geringes Verdrehspiel ermöglichen, wird damit eine genauere Zentrierung in Umfangsrichtung ermöglicht, und die Steckverbindung wird damit auch gegen Verdrehung im zusammengesteckten Zustand mit geringerem Umfangsspiel gesichert.

Ein weiterer Vorteil der erfindungsgemäßen Montagehilfe besteht darin, dass auch die Koaxialität zwischen dem Stecker und dem Rohrstutzen verbessert wird. Dies geschieht dadurch, dass die Zapfen mit engem Durchmesser und entsprechendem elastischen Federvermögen relativ stramm auf das gegenüberliegende Teil aufgesteckt werden und die beiden Teile beim Zusammenführen schon koaxial zueinander zentriert werden, wodurch die Einsteckqualität der Rastverbindung verbessert wird.

Ein weiterer Vorteil der Erfindung liegt darin, dass die beschriebene Verschiebeführung auch eine Sicherung der Steckverbindung gegen Verdrehung in Umfangsrichtung im montierten Zustand gewährleistet. Dies wird dadurch erreicht, dass die Zapfen ständig in die zugeordneten Ausnehmungen am gegenüberliegenden Teil eingreifen und dort gegen Verdrehung sichern.

Mit den beschriebenen Zapfen wird auch erstmals eine optische Überprüfung auf richtige Steckmontage der beiden zusammen zu steckenden Teile möglich. Es kann nun einfach durch optische Überprüfung festgestellt werden, ob die Zapfen in den zugeordneten Ausnehmungen eingreifen, und damit ist sichergestellt, dass auch die (unsichtbare) Rastverbindung sicher und fest eingerastet ist.

Dies ist ein wesentlicher Vorteil gegenüber dem Stand der Technik, denn - wie in der allgemeinen Beschreibungseinleitung erwähnt - konnte es insbesondere bei Werkzeugmontage vorkommen, dass die Rastverbindung gewaltsam geschlossen wurde, ohne dass überprüft werden konnte, ob überhaupt die Rastverbindung bestand. Dies wird mit der Erfindung vermieden, weil die als Montagehilfe wirkenden Zapfen nur dann in die zugeordneten Ausnehmungen am anderen Teil eingreifen können, wenn auch die Rastverbindung entsprechend ordnungsgemäß verrastet ist.

Kommt es zu einer winkelversetzten Einsteckposition zwischen dem Stecker und dem Rohrstutzen, dann ist dies von außen her ohne weiteres sichtbar, denn dann greifen die Zapfen nicht mehr in die zugeordneten Ausnehmungen ein, sondern sie schlagen an dem Flanschring am gegenüberliegenden Teil an, in dem die Ausnehmungen für den Durchgriff des Zapfen eingearbeitet sind.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Darstellung einer Rastverbindung in teilweise aufgeschnittenem Zustand,
- Figur 2:: die gleiche Darstellung wie Figur 1 im weiter zueinander geführten Zustand,
- Figur 3:: die Stirnansicht der geschlossenen Rastverbindung,

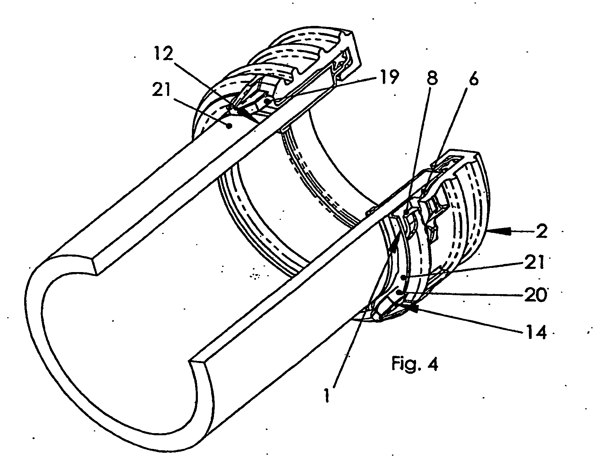

- Figur 4:: die perspektivische und teilweise geschnittene Darstellung der geschlossenen Rastverbindung.

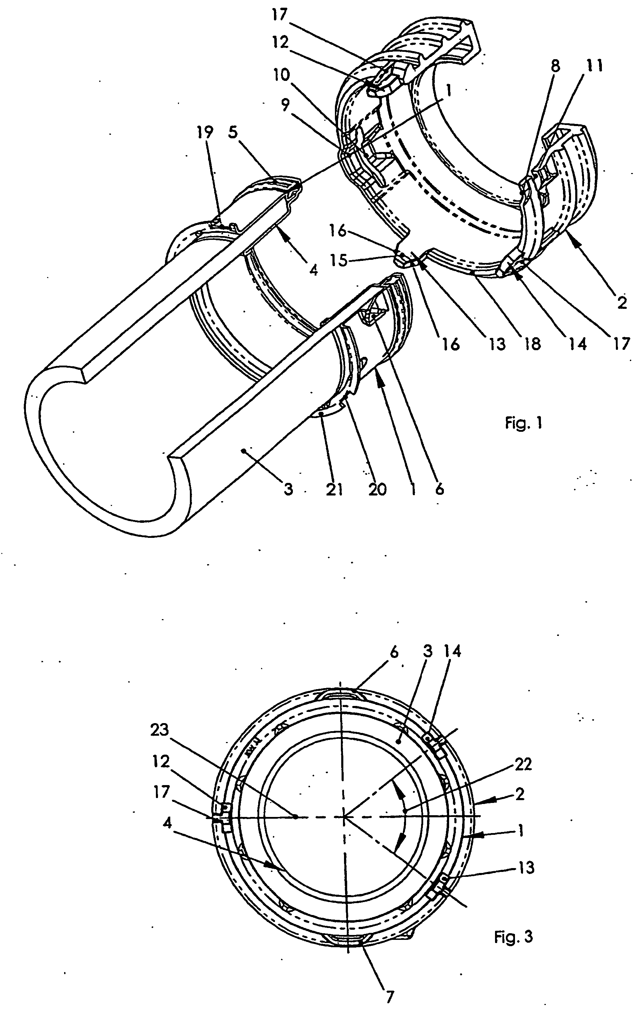

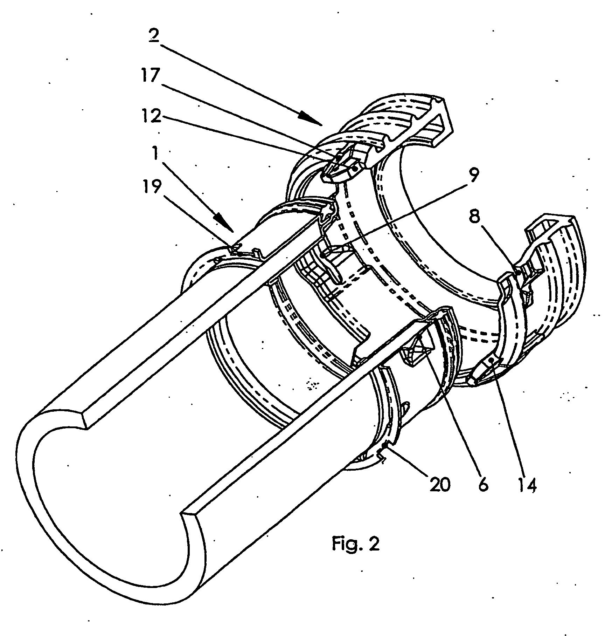

In Figur 1 wird allgemein ein Rohrstutzen 2 mit einem Stecker 1, 4 zusammengesteckt, wobei der Stecker aus einer Außenhülse 1 und einer damit verbundenen Innenhülse 4 besteht.

Gemäss Figur 3 wird in den Verbindungsraum zwischen der Außenhülse 1 und der Innenhülse 4 ein Schlauch 3 eingeführt und dort festgelegt.

Zu dem Stecker 1, 4 gehört auch ein Dichtring 5, welcher mit zugeordneten Dichtflächen an der Innenseite des Rohrstutzens 2 zusammenwirkt.

Die eigentliche Rastverbindung zwischen den beiden Teilen 2 und 1, 4 wird durch jeweils einander gegenüberliegende Sicken 6, 7 hergestellt, die am Außenumfang der Aussenhülse 1 angeordnet sind und beispielsweise im Winkel von 180° einander gegenüberliegen. Diese Sicken 6, 7 wirken mit zugeordneten Rastöffnungen 8, 9 im Rohrstutzen 2 im Sinne der Beschreibung der EP 0 750 152 B1 zusammen.

Zur Herstellung der Rastverbindung dringen die Sicken 6, 7 in die zugeordneten Rastöffnungen 8, 9 ein und gelangen dort in den Bereich von Durchbrüchen 10, 11, in welchen eine Rastfeder einliegt. Diese Rastfeder ist in den Zeichnungen nicht dargestellt.

Die entsprechenden Sicken 6, 7 legen sich dann unter der - nicht dargestellten - Rastfeder an, so dass eine Rastverbindung zwischen dem Rohrstutzen 2 und dem Stecker 1, 4 besteht.

Die erfindungsgemäße Verschiebeführung besteht im gezeigten Ausführungsbeispiel aus Zapfen 12, 13, 14, die ungleichmäßig verteilt an der Stirnfläche 18 des Rohrstutzens 2 angeordnet sind und axial nach vorne die Stirnfläche 18 überragen.

Jeder Zapfen 12 - 14 weist eine radial nach innen gerichtete, in radialer Richtung wirkende und verlaufende Radial-Einlaufschräge 15 auf und weist im übrigen zwei symmetrisch zueinander angeordnete, in Umfangsrichtung wirkende und verlaufende seitliche Umfangs-Einlaufschrägen 16 auf.

Die Schrägen 16 sollen das Einführen in die gegenüberliegenden, an der Außenhülse 1 angeordneten Ausnehmungen 19, 20 erleichtern. Sie zentrieren also die Zapfen 12 - 14 im Bereich dieser Ausnehmungen 19, 20 in Umfangsrichtung. Damit wird ein sehr geringes Verdrehspiel erreicht.

Die radial nach innen gerichtete Einlaufschräge 15 führt dazu, dass die beiden miteinander zusammen zu steckenden Teile 2; 1, 4 mit engem Koaxialspiel ineinander gesteckt werden, weil beim Zusammenstecken die Zapfen 12- 14 federnd sich radial nach außen verformen und hierdurch eine sehr gute Zentrierung der beiden zusammen zu steckenden Teile geschieht.

Wichtig ist, dass - wenn die ordnungsgemäße Stecklage zwischen den Teilen 2; 1, 4 verfehlt wird - dann die vorderen Stirnseiten der Zapfen 12 - 14 an dem zugeordneten Flanschring 21 an der Aussenhülse 1 anschlagen und eine Rastverbindung zwischen den Sicken 6 - 7 und den zugeordneten Rastöffnungen 8, 9 nicht mehr herstellbar ist. Dies bedeutet, dass zunächst die Verschiebeführung mit den Zapfen 12- 14 in die zugeordneten Ausnehmungen 19, 20 eingeschoben werden muss, bevor die Rastverbindung im Bereich zwischen den Sicken 6 und der zugeordneten Rastfeder im Bereich der Durchbrüche 10, 11 hergestellt wird.

Damit wird die Funktion einer Montagehilfe erfüllt, denn diese Montagehilfe sorgt dafür, dass diese Rastverbindung lagenrichtig zusammengesteckt wird.

Als Beispiel für die Sicherung gegen unbeabsichtigtes Verdrehen ist in Figur 3 dargestellt, dass beispielsweise der Zapfen 12 auf der Symmetrielinie 23 liegt und im Winkel 22 hiervon versetzt die beiden anderen Zapfen 13, 14 angeordnet sind.

Auf diese Weise ist nur eine einzige Stecklage zwischen dem Rohrstutzen 2 und dem Stecker 1, 4 möglich.

Es wird noch darauf hingewiesen, dass es nicht lösungsnotwendig ist, dass der Flanschring 21 mit den Ausnehmungen 19, 20 ein werkstoffeinstückiges Teil mit der Außenhülse 1 bilden muss. Es kann die gesamte Verschiebeführung auch als separates Teil zu einer bereits vorhandenen Rastverbindung verwendet werden. Dies bedeutet, dass auch die Zapfen 12- 14 nicht notwendigerweise ein einziges Teil mit dem Rohrstutzen 2 bilden müssen. Diese können auf einem getrennten Ring angeordnet werden, der beispielsweise mit dem Rohrstutzen 2 in irgendeiner Weise lösbar oder unlösbar verbunden ist. Gleiches gilt auch für den Flanschring 21 an der Außenhülse 1, der ebenfalls als separates Teil von der Außenhülse 1 ausgebildet sein kann.

Es wurde bereits schon im allgemeinen Beschreibungsteil darauf hingewiesen, dass auch sämtliche kinematischen Umkehrungen von dem vorliegenden Erfindungsgegenstand umfasst werden sollen. So können beispielsweise derartige Zapfen an der Außenhülse 1 angeordnet werden und die dazu gehörenden Ausnehmungen an dem gegenüber liegenden Rohrstutzen 2.

Es kommt also nur darauf an, dass vor Herstellung der Rastverbindung zwischen dem Stecker 1, 4 und dem Rohrstutzen 2 die erfindungsgemäße Montagehilfe wirksam wird und ein winkelgerechtes, verdrehgesichertes Einstecken ermöglicht, welches eine optische Kontrolle der Stecklage auch bei gesteckter Rastverbindung gewährleistet.

Nachfolgend werden die Merkmale der vorliegenden Erfindung in zusammengefasster Form wiedergegeben:
Nur eine Winkellage Stecker-Stutzen möglich (auch auf andere Art möglich und bekannt) - Dadurch kann beim Einstecken der ersten Seite ein Fehler gemacht werden.
Fehlmontage - Winkellage auch bei Kunststoff-Stutzen ausgeschlossen.
Zentrierwirkung beim Einstecken.
Optische Überprüfung der Winkellage ohne diese Montagehilfe nach dem Stecken nicht mehr möglich.
"Winkeispiel" auf ein Minimum reduziert - weniger Verschleiss an allen Komponenten v.a. an Dichtring - Höhere Belastbarkeit.
Verringerung der Kippbewegung (bedingt durch Fertigungstoleranzen und Temperaturausdehnung) durch leicht zu beherrschende, kleine Features.
Evtl. können die Zapfen elastisch ausgeführt werden, um eine bessere Zentrierwirkung zu erzielen (Koaxialität sicherstellen).
Kleine Masse lassen sich genauer fertigen, und dadurch kann das Spiel der Teile (Stecker - Stutzen) zueinander stark verringert werden. Bislang mussten grosse Durchmesser zueinander abgestimmt werden.
Ausstanzung 19, 20 sehr genau herstellbar (± 0,05) im Verhältnis zu gezogenen Durchmessern, die um Faktor 10 grösser sind (± 0,2).

Die Erfindung betrifft also zusammenfassend eine Steckverbindung mit Montagehilfe für den Anschluss von Rohr- und Schlauchleitungen, insbesondere zur Verwendung von Rohrleitungssystemen von Kraftfahrzeugen und dergleichen, mit einem Rohrstutzen und einem mit diesem ggf. verrastend zusammen wirkenden Stecker, an dem die Rohr- und Schlauchleitung befestigt ist, wobei zwischen dem Stecker und dem Rohrstutzen eine in axialer Richtung wirkende Verschiebeführung angeordnet ist, die gegen Verdrehung in Umfangsrichtung sichert. Zusätzlich zur Verdrehsicherung im Montagezustand wird die Gefahr einer winkelverdrehten oder nicht eingerasteten Fehlmontage minimiert, welche zudem anhand der Stellung Zapfen/Ausnehmungen leicht erkannt werden könnte.

### Zeichnungs-Legende

- 1: Außenhülse
- 2: Rohrstutzen
- 3: Schlauch
- 4: Innenhülse
- 5: Dichtring
- 6: Sicke
- 7: Sicke
- 8: Rastöffnung
- 9: Rastöffnung
- 10: Durchbruch
- 11: Durchbruch
- 12: Zapfen
- 13: Zapfen
- 14: Zapfen
- 15: Radial-Einlaufschräge
- 16: Umfangs-Einlaufschräge
- 17: Verstärkungsrippe
- 18: Stirnfläche
- 19: Ausnehmung
- 20: Ausnehmung
- 21: Flanschring
- 22: Winkel
- 23: Symmetrielinie
- 1, 4: Stecker

## Patentansprüche

1. Steckverbindung für den Anschluss von Rohr- und Schlauchleitungen, insbesondere zur Verwendung von Rohrleitungssystemen von Kraftfahrzeugen und dergleichen, mit einem Rohrstutzen (2) und einem mit diesem zusammen wirkenden Stecker (1, 4), an dem die Rohr- und Schlauchleitung (3) befestigt ist, wobei zwischen dem Stecker (1, 4) und dem Rohrstutzen (2) eine in axialer Richtung wirkende Verschiebeführung (12-14; 19, 20) angeordnet ist, die gegen Verdrehung in Umfangsrichtung sichert, die aus mehreren an der vorderen Stirnfläche (18) des Steckers (1, 4) und/oder des Rohrstutzens (2) verteilt angeordneten und in axialer Richtung wirkenden Zapfen (12-14) besteht, welche mit zugeordneten Ausnehmungen (19, 20) am gegenüber liegenden Teil (1, 4; 2) zusammen wirken, wobei als Montagehilfe zur Sicherung der Steckverbindung gegen Einwirkung von Drehmomenten die Ausnehmungen (19,20) unmittelbar am Außenumfang des gegenüberliegenden Teils angeformt sind und die Montagehilfe nur eine bestimmte Verdrehlage zwischen den zusammenzusteckenden Teilen erlaubt, **dadurch gekennzeichnet, dass** die Zapfen (12-14) über den Umfang Steckers (1, 4) und/oder des Rohrstutzens (2) verteilt asymmetrisch angeordnet sind und mit zugeordneten, asymmetrisch über den Umfang angeordneten Ausnehmungen (19, 20) des anderen Teiles (1, 4; 2) zusammen arbeiten.

2. Steckverbindung nach Anspruch 1, **dadurch gekennzeichnet, dass** der Stecker (1, 4) mit dem Rohrstutzen (2) lösbar über eine Rastvorrichtung (6, 7; 10, 11) verrastbar ist.

3. Steckverbindung nach einem der Ansprüche 1 oder 2, **dadurch gekennzeichnet, dass** der Stecker (1, 4) aus einer Außenhülse (1) und einer damit verbundenen Innenhülse (4) besteht.

4. Steckverbindung nach einem der Ansprüche 1 bis 3, **dadurch gekennzeichnet, dass** die Verschiebeführung (12-14; 19, 20) aus mehreren an der vorderen Stirnfläche (18) des Steckers (1, 4) und/oder des Rohrstutzens (2) verteilt angeordneten und in axialer Richtung wirkenden Zapfen (12-14) besteht, welche mit zugeordneten Ausnehmungen (19, 20) am gegenüber liegenden Teil (1, 4; 2) zusammen wirken.

5. Steckverbindung nach einem der Ansprüche 1 bis 4, **dadurch gekennzeichnet, dass** die Verschiebeführung (19, 20) aus mehreren an der Umfangsfläche des Steckers (1, 4) und/oder des Rohrstutzens (2) verteilt angeordneten und in radialer Richtung sich erstreckenden Zapfen besteht, welche mit zugeordneten Ausnehmungen (19, 20) am gegenüber liegenden Teil (1, 4; 2) zusammen wirken.

6. Steckverbindung nach einem der Ansprüche 1 bis 5, **dadurch gekennzeichnet, dass** die Zapfen (12-14) am Umfang des Steckers (1, 4) und/oder des Rohrstutzens (2) unterschiedliche Breite zueinander besitzen und mit zugeordneten Ausnehmungen (19,20) des anderen Teiles (1, 4; 2) zusammen arbeiten.

7. Steckverbindung nach einem der Ansprüche 1 bis 6, **dadurch gekennzeichnet, dass** die Zapfen (12-14) des Steckers (1, 4) und/oder des Rohrstutzens (2) in den Ausnehmungen (19, 20) des anderen Teiles (1, 4: 2) im Montagezustand nur geringes Verdrehspiel besitzen.

8. Steckverbindung nach einem der Ansprüche 1 bis 7, **dadurch gekennzeichnet, dass** die Zapfen (12-14) des Steckers (1, 4) und/oder des Rohrstutzens (2) in radialer Richtung elasisch federnd ausgebildet sind.

9. Steckverbindung nach einem der Ansprüche 1 bis 8, **dadurch gekennzeichnet, dass** die Zapfen (12-14) des Steckers (1, 4) und/oder des Rohrstutzens (2) auch im Betriebszustand In die Ausnehmungen (19, 20) des anderen Teiles (1, 4; 2) eingreifen.

10. Steckverbindung nach einem der Ansprüche 1 bis 9, **dadurch gekennzeichnet, dass** die Zapfen (12-14) des Steckers (1, 4) und/oder des Rohrstutzens (2) und die Ausnehmungen (19, 20) des anderen Teiles (1, 4; 2) mindestens teilweise am Aussenumfang der Steckverbindung angeordnet ist, so dass eine optische Überprüfung auf richtige Steckmontage der beiden zusammen zu steckenden Teile (1, 4; 2) möglich ist.

11. Steckverbindung nach einem der Ansprüche 1 bis 10, **dadurch gekennzeichnet, dass** die Zapfen (12-14) des Steckers (1, 4) und/oder des Rohrstutzens (2) und die Ausnehmungen (19, 20) des anderen zugeordneten Teiles (1, 4; 2) werkstoffeinstückig mit dem jeweiligen Teil (1, 4; 2) verbunden sind.

12. Steckverbindung nach einem der Ansprüche 1 bis 11, **dadurch gekennzeichnet, dass** die Zapfen (12-14) am Rohrstutzen (2) und die Ausnehmungen (19, 20) am Stecker (1, 4) angeordnet sind.

13. Steckverbindung nach einem der Ansprüche 1 bis 12, **dadurch gekennzeichnet, dass** die Ausnehmungen (19,20) in einem mindestens teilweise radialen Flanschring (21) der Aussenhülse (1) des Steckers (1, 4) eingebracht sind, welcher Flanschring (21) als axiale Anschlagfläche für die Zapfen (12-14) des Rohrstutzen (2) während der Montage dient.

14. Steckverbindung nach einem der Ansprüche 2 bis 13, **dadurch gekennzeichnet, dass** die Rastvorrichtung (6, 7; 10, 11) zwischen Stecker (1, 4) und Rohrstutzen (2) einrastet, sobald sich die Zapfen (12-14) ordnungsgemäß in den zugeordneten Ausnehmungen (19, 20) befinden.

15. Steckverbindung nach einem der Ansprüche 1 bis 14, **dadurch gekennzeichnet, dass** die Zapfen (12-14) und/oder die Ausnehmungen (19, 20) eine in radialer Richtung verlaufende und wirkende Radial-Einlaufschräge (15) aufweisen.

16. Steckverbindung nach einem der Ansprüche 1 bis 15, **dadurch gekennzeichnet, dass** die Zapfen (12-14) und/oder die Ausnehmungen (19, 20) in Umfangsrichtung verlaufende und wirkende Umfangs-Einlaufschrägen (16) aufweisen.

17. Steckverbindung nach Anspruch 16, **gekennzeichnet,** dass die Umfangs-Einlaufschrägen (16) der Zapfen (12-14) und/oder der Ausnehmungen (19, 20) in beiden Drehrichtungen vorhanden sind.

## Claims

1. Plug-in connector for connecting pipes and hoses, particularly for use in pipe systems of motor vehicles and the like, with a pipe socket (2) and a spigot (1, 4) cooperating therewith to which the pipe [and] hose (3) is attached, wherein a sliding guide (12-14; 19, 20) acting in the axial direction and arranged between the spigot (1, 4) and the socket (2) guards against twisting in the circumferential direction, and consists of a plurality of lobes (12-14) acting in the axial direction and disposed at intervals on the front end face (18) of the spigot (1, 4) and/or socket (2) and cooperating with mating recesses (19, 20) on the opposite part (1, 4; 2), wherein as an assembly aid to guard the plug-in connector against the action of torque the recesses (19, 20) are formed directly on the outer circumference of the opposite part and the assembly aid allows only a defined orientation between the parts to be plugged together, **characterized in that** the lobes (12-14) are distributed asymmetrically over the circumference of spigot (1, 4) and/or socket (2) and cooperate with mating recesses (19, 20) on the other part (1, 4; 2) that are arranged asymmetrically over the circumference.

2. Plug-in connector according to Claim 1, **characterized in that** the spigot (1, 4) is releasably lockable to the socket (2) by a catch (6, 7; 10, 11).

3. Plug-in connector according to Claim 1 or Claim 2, **characterized in that** the spigot (1, 4) consists of an outer sleeve (1) and an inner sleeve (4) joined thereto.

4. Plug-in connector according to any one of Claims 1 to 3, **characterized in that** the sliding guide (12-14; 19, 20) consists of a plurality of lobes (12-14) acting in the axial direction and disposed at intervals on the front end face (18) of the spigot (1, 4) and/or socket (2) and cooperating with mating recesses (19, 20) on the opposite part (1, 4; 2).

5. Plug-in connector according to any one of Claims 1 to 4, **characterized in that** the sliding guide (19, 20) consists of a plurality of lobes extending in the radial direction and disposed at intervals on the circumferential face of the spigot (1, 4) and/or socket (2) and cooperating with mating recesses (19, 20) on the opposite part (1, 4; 2).

6. Plug-in connector according to any one of Claims 1 to 5, **characterized in that** the lobes (12-14) on the circumference of the spigot (1, 4) and/or socket (2) have different widths and cooperate with mating recesses (19, 20) of the other part (1, 4; 2).

7. Plug-in connector according to any one of Claims 1 to 6, **characterized in that** the lobes (12-14) of the spigot (1, 4) and/or socket (2) have only slight circumferential play in the recesses (19, 20) of the other part (1, 4; 2) in the assembled condition.

8. Plug-in connector according to any one of Claims 1 to 7, **characterized in that** the lobes (12-14) of the spigot (1, 4) and/or socket (2) are elastically springy in the radial direction.

9. Plug-in connector according to any one of Claims 1 to 8, **characterized in that** the lobes (12-14) of the spigot (1, 4) and/or socket (2) also engage in the recesses (19, 20) of the other part (1, 4; 2) in the operating condition.

10. Plug-in connector according to any one of Claims 1 to 9, **characterized in that** the lobes (12-14) of the spigot (1, 4) and/or socket (2) and the recesses (19, 20) of the other part (1, 4; 2) are at least partly arranged on the outer circumference of the connector, permitting a visual check that the two parts (1, 4; 2) are assembled correctly.

11. Plug-in connector according to any one of Claims 1 to 10, **characterized in that** the lobes (12-14) of the spigot (1, 4) and/or socket (2) and the recesses (19, 20) of the other mating part (1, 4; 2) are integrally joined to the respective part (1, 4; 2).

12. Plug-in connector according to any one of Claims 1 to 11, **characterized in that** the lobes (12-14) are arranged on the socket (2) and the recesses (19, 20) on the spigot (1, 4).

13. Plug-in connector according to any one of Claims 1 to 12, **characterized in that** the recesses (19, 20) are made in an at least partly radial flange ring (21) of the outer sleeve (1) of the spigot (1, 4), which flange ring (21) serves as an axial stop face for the lobes (12-14) of the socket (2) during assembly.

14. Plug-in connector according to any one of Claims 2 to 13, **characterized in that** the catch (6, 7; 10, 11) between spigot (1, 4) and socket (2) engages as soon as the lobes (12-14) are properly located in the mating recesses (19, 20).

15. Plug-in connector according to any one of Claims 1 to 14, **characterized in that** the lobes (12-14) and/or recesses (19, 20) have a radial lead-in ramp (15) extending and acting in the radial direction.

16. Plug-in connector according to any one of Claims 1 to 15, **characterized in that** the lobes (12-14) and/or recesses (19, 20) have circumferential lead-in ramps (15) extending and acting in the circumferential direction.

17. Plug-in connector according to Claim 16, **characterized [in] that** the circumferential lead-in ramps (16) of the lobes (12-14) and/or recesses (19, 20) are present in both rotational directions.

## Revendications

1. Raccord pour le raccordement de canalisations et de tuyauteries souples, en particulier pour l'utilisation de systèmes de canalisation de véhicules automobiles et similaires, avec une tubulure (2) et un élément d'emboîtement (1, 4) qui coopère avec celle-ci et auquel est fixée la canalisation ou la tuyauterie (3), étant précisé qu'il est prévu entre l'élément d'emboîtement (1, 4) et la tubulure (2) un guidage à coulissement (12-14 ; 19-20) agissant dans le sens axial, empêchant une rotation dans le sens circonférentiel et composé de plusieurs saillies (12-14) qui sont réparties sur la surface frontale avant (18) de l'élément d'emboîtement (1, 4) et/ou de la tubulure (2), qui agissent dans le sens axial et qui coopèrent avec des creux correspondants (19, 20) prévus sur l'élément opposé (1, 4 ; 2), et étant précisé que l'on prévoit, comme moyen auxiliaire de montage pour protéger le raccord de l'action de moments de rotation, de réaliser les creux (19, 20) directement sur la circonférence extérieure de l'élément opposé et que ce moyen auxiliaire ne permet qu'une position de rotation définie entre les éléments à emboîter, **caractérisé en ce que** les saillies (12-14) sont réparties de manière asymétrique sur la circonférence de l'élément d'emboîtement (1, 4) et/ou de la tubulure (2) et coopèrent avec des creux correspondants (19, 20) de l'autre élément (1, 4 ; 2) qui sont disposés de manière asymétrique sur la circonférence.

2. Raccord selon la revendication 1, **caractérisé en ce que** l'élément d'emboîtement (1, 4) est apte à être verrouillé de manière amovible sur la tubulure (2) grâce à un dispositif d'encliquetage (6, 7 ; 10, 11).

3. Raccord selon la revendication 1 ou 2, **caractérisé en ce que** l'élément d'emboîtement (1, 4) se compose d'un manchon extérieur (1) et d'un manchon intérieur (4) relié à celui-ci.

4. Raccord selon l'une des revendications 1 à 3, **caractérisé en ce que** le guidage à coulissement (12-14 ; 19, 20) se compose de plusieurs saillies (12-14) qui sont réparties sur la surface frontale avant (18) de l'élément d'emboîtement (1, 4) et/ou de la tubulure (2), qui agissent dans le sens axial et qui coopèrent avec des creux correspondants (19, 20) prévus sur l'élément opposé (1, 4 ; 2).

5. Raccord selon l'une des revendications 1 à 4, **caractérisé en ce que** le guidage à coulissement (19, 20) se compose de plusieurs saillies qui sont réparties sur la surface circonférentielle de l'élément d'emboîtement (1, 4) et/ou de la tubulure (2), qui s'étendent dans le sens radial et qui coopèrent avec des creux correspondants (19, 20) prévus sur l'élément opposé (1, 4 ; 2).

6. Raccord selon l'une des revendications 1 à 5, **caractérisé en ce que** les saillies (12-14) prévues sur la circonférence de l'élément d'emboîtement (1, 4) et/ou de la tubulure (2) ont des largeurs différentes et coopèrent avec des creux correspondants (19, 20) de l'autre élément (1, 4 ; 2).

7. Raccord selon l'une des revendications 1 à 6, **caractérisé en ce que** les saillies (12-14) de l'élément d'emboîtement (1, 4) et/ou de la tubulure (2) n'ont qu'un faible jeu de rotation dans les creux (19, 20) de l'autre élément (1, 4 ; 2), en position montée.

8. Raccord selon l'une des revendications 1 à 7, **caractérisé en ce que** les saillies (12-14) de l'élément d'emboîtement (1, 4) et/ou de la tubulure (2) sont conçues pour faire ressort dans le sens radial grâce à leur élasticité.

9. Raccord selon l'une des revendications 1 à 8, **caractérisé en ce que** les saillies (12-14) de l'élément d'emboîtement (1, 4) et/ou de la tubulure (2) pénètrent dans les creux (19, 20) de l'autre élément (1, 4 ; 2) même en fonctionnement.

10. Raccord selon l'une des revendications 1 à 9, **caractérisé en ce que** les saillies (12-14) de l'élément d'emboîtement (1, 4) et/ou de la tubulure (2) et les creux (19, 20) de l'autre élément (1, 4 ; 2) sont disposés au moins partiellement sur la circonférence extérieure du raccord, de sorte qu'un contrôle optique du bon montage par emboîtement des deux éléments à emboîter (1, 4 ; 2) est possible.

11. Raccord selon l'une des revendications 1 à 10, **caractérisé en ce que** les saillies (12-14) de l'élément d'emboîtement (1, 4) et/ou de la tubulure (2) et les creux (19, 20) de l'autre élément associé (1, 4 ; 2) sont venus de manière avec l'élément respectif (1, 4 ; 2).

12. Raccord selon l'une des revendications 1 à 11, **caractérisé en ce que** les saillies (12-14) prévues sur la tubulure (2) et les creux (19, 20) prévus sur l'élément d'emboîtement (1, 4) sont disposés sur l'élément d'emboîtement.

13. Raccord selon l'une des revendications 1 à 12, **caractérisé en ce que** les creux (19, 20) sont réalisés dans une collerette (21) au moins partiellement radiale du manchon extérieur (1) de l'élément d'emboîtement (1, 4), laquelle collerette (21) sert de surface de butée axiale pour les saillies (12-14) de la tubulure (2) pendant le montage.

14. Raccord selon l'une des revendications 2 à 13, **caractérisé en ce que** le dispositif d'encliquetage (6, 7 ; 10, 11) vient s'encliqueter entre l'élément d'emboîtement (1, 4) et la tubulure (2) dès que les saillies (12-14) se trouvent correctement dans les creux correspondants (19, 20).

15. Raccord selon l'une des revendications 1 à 14, **caractérisé en ce que** les saillies (12-14) et/ou les creux (19, 20) présentent un biseau d'introduction radial (15) qui s'étend et qui agit dans le sens radial.

16. Raccord selon l'une des revendications 1 à 15, **caractérisé en ce que** les saillies (12-14) et/ou les creux (19, 20) présentent des biseaux d'introduction circonférentiels (16) qui s'étendent et qui agissent dans le sens circonférentiel.

17. Raccord selon la revendication 16, **caractérisé en ce que** les biseaux d'introduction circonférentiels (16) des saillies (12-14) et/ou les creux (19, 20) sont prévus dans les deux sens de rotation.
